**Europäisches Patentamt**

**European Patent Office**

**Office européen des brevets**

(19)

(11) Veröffentlichungsnummer : **0 413 199 B1**

(12) **EUROPÄISCHE PATENTSCHRIFT**

(45) Veröffentlichungstag der Patentschrift :
**04.11.92 Patentblatt 92/45**

(51) Int. Cl.⁵ : **C01B 3/48,** F02C 3/28,
F02B 43/10

(21) Anmeldenummer : **90114779.3**

(22) Anmeldetag : **01.08.90**

(54) **Verfahren zur Minderung des Kohlendioxidgehalts des Abgases eines Gas- und Dampfturbinenkraftwerks und danach arbeitendes Kraftwerk.**

(30) Priorität : **16.08.89 DE 3926964**

(43) Veröffentlichungstag der Anmeldung :
**20.02.91 Patentblatt 91/08**

(45) Bekanntmachung des Hinweises auf die
Patenterteilung :
**04.11.92 Patentblatt 92/45**

(84) Benannte Vertragsstaaten :
**AT BE CH DE DK ES FR GB GR IT LI NL SE**

(56) Entgegenhaltungen :
EP-A- 0 207 620
EP-A- 0 217 505
EP-A- 0 259 114

(73) Patentinhaber : **SIEMENS
AKTIENGESELLSCHAFT
Wittelsbacherplatz 2
W-8000 München 2 (DE)**

(72) Erfinder : **Haupt, Günther, Dipl.-Ing.
Bismarckstrasse 3
W-8500 Nürnberg 20 (DE)**
Erfinder : **Müller, Rainer, Dr.
Herdegenplatz 1
W-8520 Erlangen (DE)**

## Beschreibung

Verfahren zur Minderung des Kohlendioxidgehalts des Abgases eines Gas- und Dampfturbinenkraftwerks und danach arbeitendes Kraftwerk

Die Erfindung bezieht sich auf ein Verfahren zur Minderung des Kohlendioxidgehaltes des Abgases eines Gas- und Dampfturbinenkraftwerks gemäß dem Oberbegriff des Anspruchs 1. Sie bezieht sich weiterhin auf ein nach diesem Verfahren arbeitendes fossiles Kraftwerk.

Aus der EP-A 0 259 114 ist ein Verfahren zur Erzeugung elektrischer Energie bekannt, bei dem zur Reduzierung der Stickoxid- und Schwefeloxid-Emission bei der Verbrennung eines kohlenstoffhaltigen Brennstoffs entstehendes Gas zunächst einer Shift-Reaktion unterzogen wird. Dabei wird mindestens ein Teil des in dem Gas enthaltenen Kohlenmonoxids (CO) mit Wasser ($H_2O$) oder Wasserdampf zu Kohlendioxid ($CO_2$) und Wasserstoff ($H_2$) konvertiert. Danach wird in diesem Gas enthaltenes Kohlenoxidsulfid (COS) zu Schwefelwasserstoff ($H_2S$) hydrolisiert. Anschließend wird das von Schwefel gereinigte und mit Dampf gesättigte Gas als Brenngas der Brennkammer einer Gasturbine zugeführt und dort verbrannt. Das der Gasturbine beim bekannten Verfahren entströmende heiße Rauchgas wird in einem Abhitzekessel zur Dampferzeugung benutzt und anschließend über einen Kamin in die Atmosphäre abgegeben.

Bei allen Anlagen mit fossiler Verbrennung entsteht als Verbrennungsprodukt letztendlich Kohlendioxid und gegebenenfalls Wasser. Diese beiden Produkte werden in der Regel als Abgas in die Atmosphäre entlassen. Während das so erzeugte Wasser, das häufig als Wasserdampf anfällt, für das Ökosystem unserer Erde unkritisch ist, behindert das erzeugte Kohlendioxid die Wärmeabstrahlung unserer Erde und führt dabei infolge des sogenannten Treibhauseffekts zu einer Erhöhung der Oberflächentemperatur der Erde. Dies könnte zu unerwünschten Klimaverschiebungen führen. Fossil beheizte Kraftwerke gehören zu den größten Emittenden von Kohlendioxid.

Der Erfindung liegt die Aufgabe zugrunde, einen Weg zu weisen, wie man bei einem fossil beheizten Gas- und Dampfturbinenkraftwerk die Abgabe von Kohlendioxid an die Atmosphäre gering halten kann.

Diese Aufgabe wird bei einem Verfahren der eingangs genannten Art erfindungsgemäß durch die im Kennzeichen des Anspruchs 1 angegebenen Merkmale gelöst.

Ein GUD-Kraftwerk, das nach diesem Verfahren arbeitet, ist erfindungsgemäß gekennzeichnet durch

- eine Anlage (58, 286) zur Entfernung des Kohlendioxids aus dem Rohgas, und
- eine Reingasleitung, mit der das von Kohlendioxid befreite Gas als Brenngas der Brennkammer der Gasturbine zuführbar ist, sowie
- eine Kohlendioxid-Eisanlage, eine Methanol-Syntheseanlage oder eine Benzin-Erzeugungsanlage, die an die Anlage (58, 286) zur Entfernung des Kohlendioxids angeschlossen ist.

Bei einem solchen Gas- und Dampfturbinenkraftwerk mit einem der Brennkammer der Gasturbine vorgeschalteten Vergaser für den fossilen Brennstoff wird das Rohgas des Vergasers bevorzugt entstaubt, zur Anpassung an die Arbeitstemperatur nachgeschalteter Anlagenteile und Katalysatoren abgekühlt, gereinigt wobei die Reihenfolge dieser Maßnahmen wählbar ist, und vorzugsweise mit Wasserdampf angereichert, sodann wird konvertiert, d.h., das enthaltene Kohlenmonoxid wird in Kohlendioxid verwandelt. Dabei tritt eine weitgehende Umlagerung der chemisch gebundenen Energie des Rohgases, die später in der Gasturbinenbrennkammer genutzt werden soll, von Kohlenmonoxid auf Wasserstoff ein.

Danach werden Kohlendioxid sowie bevorzugt auch Schwefelverbindungen, z.B. Schwefelwasserstoff, mit einem oder mehreren Waschmitteln abgetrennt. Dabei kann das Kohlendioxid wahlweise in eine Kohlendioxid-Eisanlage geleitet werden. Das entstehende Kohlendioxid-Eis kann industriell genutzt oder in die Tiefsee verfrachtet werden. Bei diesem letzteren Verfahren wird eine Abgabe von Kohlendioxid in die Atmosphäre weitestgehend unterbunden, weil das Kohlendioxid gelöst enthaltende Tiefenwasser nicht mit dem Oberflächenwasser ausgetauscht wird. Alternativ kann das Kohlendioxid z.B. zur sogenannten tertiären Ölförderung eingesetzt werden. Das nahezu kohlendioxidfreie, im wesentlichen Wasserstoff enthaltende Restgas wird nun der Brennkammer der Gasturbine als Brennstoff zugeführt.

Die Belastung der Atmosphäre mit Schwefeldioxid kann über die bereits angesprochene Schwefelwasserstoff-Entfernung hinaus weiter verringert werden, wenn in Ausgestaltung der Erfindung das im Rohgas enthaltene Kohlenoxidsulfid vor der Entschwefelung durch Hydrolyse aus dem Rohgas entfernt wird. So wird verhindert, daß das Kohlenoxidsulfid in der Brennkammer der Gasturbine in Schwefeldioxid, und Kohlendioxid umgewandelt wird.

Bevorzugt wird dem Vergaser des Kraftwerks eine Luftzerlegungsanlage zugeordnet. Der Wirkungsgrad des Kraftwerkprozesses läßt sich dann erhöhen, wenn ein Produktgas der Luftzerlegungsanlage in Weiterbildung der Erfindung zur Kühlung des der genannten Kohlendioxid-Eisanlage zuströmenden Kohlendioxids herangezogen wird. In diesem Fall kann ein Teil der sonst für die Kohlendioxid-Eisanlage aufzuwendenden Energie eingespart werden.

Der Massenstrom durch die Gasturbine und damit deren Leistung läßt sich vorteilhafterweise vergrößern, wenn in weiterer Ausgestaltung der Erfindung der in der Luftzerlegungsanlage anfallende Stickstoff in die Brennkammer der Gasturbine eingeleitet wird. Zugleich läßt sich so die $NO_x$-Bildung gering halten.

Es hat sich als besonders vorteilhaft erwiesen, wenn der fossile Brennstoff mit reinem oder abgereichertem Sauerstoff vergast wird. Hierdurch lassen sich der Vergaser und die nachgeschalteten einzelnen Anlagenteile bautechnisch relativ kompakt und preiswert herstellen.

Vorteilhafterweise kann eine Anlage zur Kohlenoxidsulfid-Hydrolyse zwischen der Konvertierungsanlage und der Entschwefelungsanlage in die Rohgasleitung eingebaut sein. Hierdurch wird das Kohlenoxidsulfid des Rohgases in Kohlendioxid und Schwefelwasserstoff umgewandelt. Das der Brennkammer der Gasturbine zuströmende Reingas kann somit praktisch frei von Schwefelverbindungen gehalten werden.

Einen besonders guten Ausbrand des Brennstoffs erreicht man, wenn dem Vergaser ein Staubabscheider nachgeschaltet ist, der staubabgabeseitig an eine in den Vergaser zurückführende Rezirkulationsleitung angeschlossen ist. In diesem Fall wird nur teilweise umgesetzter Brennstoff rezirkuliert. Er wird erneut der Vergasung ausgesetzt. Somit kann der Ausnutzungsgrad des Brennstoffs verbessert werden.

In einer weiteren zweckmäßigen Ausgestaltung kann bei Verwendung mehrerer Staubabscheider der letzte Staubabscheider bei Verwendung eines Wirbelschichtvergasers mit seiner Staubabzugsleitung an eine konventionelle, stationäre oder zirkulierende Wirbelschicht-Feuerungsanlage angeschlossen sein. Diese Maßnahme erlaubt es, die bei einem solchen Vergaser begrenzte Umsetzung des Brennstoffs ohne besonderen Nachteil vollständig in der nachgeschalteten konventionellen Wirbelschicht-Feuerungsanlage auszugleichen.

Ausführungsbeispiele der Erfindung werden anhand von drei Figuren näher erläutert. Es zeigen:

FIG 1 ein Gas- und Dampfturbinenkraftwerk mit einer Anlage zur Brenngaserzeugung mit einem Wirbelschichtvergaser mit $CO_2$-Entsorgung durch eine Kohlendioxid-Eisanlage,

FIG 2 ein prinzipielles Schaltbild eines GUD-Kraftwerks mit $CO_2$-Entsorgung durch eine Methanol-Syntheseanlage und

FIG 3 ein Gas- und Dampfturbinenkraftwerk mit einer Anlage zur Brenngaserzeugung mit einem Flugstromvergaser.

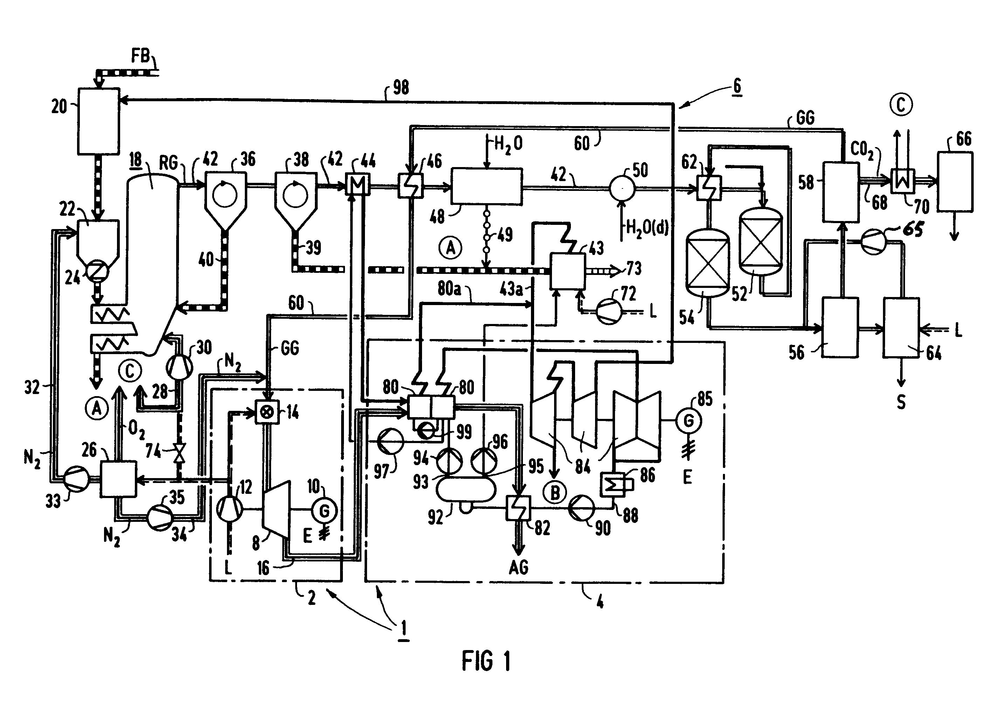

Nach der schematischen Darstellung von FIG 1 umfaßt ein GUD- oder Gas- und Dampfturbinenkraftwerk 1 einen Gasturbinenkraftwerksteil 2 und einen Dampfturbinenkraftwerksteil 4. Dem Gasturbinenkraftwerksteil 2 ist brennstoffseitig eine Anlage 6 zur Erzeugung von Brenngas vorgeschaltet.

Der Gasturbinenkraftwerksteil 2 besteht hier aus einer Gasturbine 8, einem von der Welle der Gasturbine 8 angetriebenen Generator 10, einem ebenso angetriebenen Luftverdichter 12, einer der Gasturbine 8 vorgeschalteten Brennkammer 14 und einer die Gasturbine 8 verlassenden Abgasleitung 16. Der Luftverdichter 12 versorgt die Brennkammer 14 mit Frischluft L. Die Brennkammer 14 wird darüber hinaus mit Reingas GG gespeist, das als Brenngas dient. Dem Reingas GG kann dabei ein gewisser Anteil Stickstoff $N_2$ beigemischt sein.

Die Anlage 6 zur Erzeugung des Brenngases für die Brennkammer 14 der Gasturbine 8 umfaßt im dargestellten Ausführungsbeispiel einen Wirbelschichtvergaser 18, bevorzugt einen sogenannten Winkler-Vergaser. Diesem ist brennstoffseitig die Serienschaltung aus einer Mahl-Trocknungs-Anlage 20 und einem Brennstoffbunker 22 mit Dosiervorrichtung 24 für den fossilen Brennstoff FB vorgeschaltet. Als Brennstoff FB kommt vorliegend Kohle, aber auch schweres Heizöl, Torf, Ölschiefer etc. in Betracht. Dem Wirbelschichtvergaser 18 ist eine (insbesondere auf Kältewirkung beruhende) Luftzerlegungsanlage 26 zugeordnet, welche vom Luftverdichter 14 des Gasturbinenkraftwerkteils 2 mit Luft L versorgt wird. Sie zerlegt die Luft L im wesentlichen in Sauerstoff $O_2$ und Stickstoff $N_2$. Dabei ist es ausreichend, wenn die Zerlegung unvollständig ist, d.h. dem Sauerstoff $O_2$ noch ein Anteil Stickstoff $N_2$ beigemischt ist, und umgekehrt. Die Sauerstoffleitung 28 der Luftzerlegungsanlage 26 ist über einen Sauerstoffverdichter 30 an den Wirbelschichtvergaser 18 angeschlossen. Eine erste Stickstoffleitung 32 der Luftzerlegungsanlage 26 ist über einen ersten Stickstoffverdichter 33 an den Brennstoffbunker 22 angeschlossen. Eine zweite Stickstoffleitung 34 der Luftzerlegungsanlage 26 ist über einen zweiten Stickstoffverdichter 35 an die Brennkammer 14 der Gasturbine 8 angeschlossen.

Das vom Wirbelschichtvergaser 18 in eine Rohgasleitung 42 abgegebene Rohgas RG wird zunächst entstaubt. Dazu ist der Wirbelschichtvergaser 18 rohgasseitig an einen ersten und zweiten (oder an mehr) Staubabscheider 36, 38 angeschlossen. Der erste Staubabscheider 36 ist staubabgabeseitig mit einer zurück in den Wirbelschichtvergaser 18 führenden Rezirkulationsleitung 40 versehen. Der zweite Staubabscheider 38 ist staubabgabeseitig über eine Leitung 39 bei "A" an eine konventionelle Wirbelschicht-Verbrennungsanlage 43 angeschlossen. In der Rohgasleitung 42 ist hinter den Staubabscheidern 36, 38 ein Abhitzedampferzeuger 44 zur Erzeugung von Hochdruckdampf angeordnet. Hinter diesem liegt in der Rohgasleitung 42 ein Rohgas-Reingas-Wärmetauscher 46, der zur Wiederaufheizung des der Brennkammer 14 der Gasturbine 8 zuströmenden Reingases GG dient. In der Rohgasleitung 42 sind zur weiteren Reinigung nachfolgend ein Naßabscheider 48, eine Konvertierungsanlage 52, eine Anlage 54 zur Kohlenoxidsulfidhydrolyse, eine Anlage 56 zur Entfernung von Schwefelwasserstoff ("Entschwefelungsanlage") und eine Anlage 58 zur Entfernung von Kohlendioxid ("Kohlendioxid-Waschanlage") eingebaut. Anschließend führt diese Leitung 42 - als gereinigtes Gas oder Reingas GG leitende Reingasleitung 60 - über den Rohgas-Reingas-Wärmetauscher 46 in die Brennkammer 14. In der Rohgasleitung 42 ist darüber hinaus vor der Anlage 54 zur Kohlenoxidsulfidhydrolyse eine Gas/Gas-Wärmetauscheranlage 62 eingebaut, die von dem der Konvertierungsanlage 52 zuströmenden Rohgas RG durchströmt ist. Die Anlage 54 hydrolysiert das Kohlenoxidsulfid COS zu Schwefelwasserstoff $H_2S$. Die Anlagen 52 und 54 enthalten in bekannter Weise geeignete Katalysatorbetten.

Zusätzlich kann eine Mischstelle 50 zur Zumischung von Wasserdampf $H_2O$ vor der Wärmetauscheranlage 62 angeordnet sein.

Die Entschwefelungsanlage 56 ist an eine mit Luft L beaufschlagte Clausanlage 64 mit zugeordnetem Verdichter 65 angeschlossen. Diese gibt im Betrieb Schwefel S ab. Der Verdichter 65 liegt dabei in einer Rückführleitung für nicht umgesetztes Rest-$H_2S$-Gas ("Tail-Gas"). Die Kohlendioxid-Waschanlage 58 ist an eine Kohlendioxid-Eisanlage 66 angeschlossen. In der zur Kohlendioxid-Eisanlage 66 führenden Kohlendioxidleitung 68 ist eine Wärmetauscheranlage 70 eingebaut. Diese von einem kalten Produktgas der Luftzerlegungsanlage 26, im Ausführungsbeispiel vom Sauerstoff $O_2$, durchströmt. Hierzu ist die Wärmetauscheranlage 70 bei "C" in die von der Anlage 26 zum Vergaser 18 führende Sauerstoffleitung 28 geschaltet. Der Naßabscheider 48 ist mit seiner Feststoff-Austragsleitung 49 (ebenso wie der zweite Staubabscheider 38) an die Wirbelschicht-Verbrennungsanlage 43 angeschlossen. Diese Anlage 43 wird von einem separaten Luftverdichter 72 mit Frischluft L versorgt. Die Ascheentsorgung ist mit 73 bezeichnet.

Die Luftzuführungsleitung, die von dem Verdichter 12 zu der Luftzerlegungsanlage 26 führt, ist über ein Ventil 74 direkt mit der Sauerstoffleitung 28 verbunden, die von der Luftzerlegungsanlage 26 zum Wirbelschichtvergaser 18 führt. Hierdurch soll ausgesagt werden, daß der Vergaser 18 statt mit Sauerstoff $O_2$ auch nur mit Luft oder aber mit $O_2$-angereicherter Luft betrieben werden kann.

Der Dampfturbinenkraftwerksteil 4 umfaßt einen an der Abgasleitung 16 der Gasturbine 8 angeschlossenen Abhitzedampferzeuger 80 und einen dahinter eingebauten Kondensatvorwärmer 82. Am Abhitzedampferzeuger 80 ist dampfseitig eine mehrstufige Dampfturbine 84 mit auf der Welle sitzendem Generator 85 angeschlossen. Die Generatoren 10, 85 speisen Elektrizität in ein Netz ein. An die Dampfturbine 84 ist abdampfseitig ein Kondensator 86 angeschlossen. An den Kondensator 86 schließt sich eine Kondensatleitung 88 mit einer Kondensatpumpe 90, mit dem Kondensatvorwärmer 82 und mit einem Speisewasserbehälter 92 an. Von dem Speisewasserbehälter 92 führt ein erster Strang 93 der Speisewasserleitung, der mit einer ersten Speisewasserpumpe 94 ausgerüstet ist, zu den Heizflächen des Abhitzedampferzeugers 80. Ein zweiter Strang 95 der Speisewasserleitung, der mit einer zweiten Speisewasserpumpe 96 ausgerüstet ist, führt zu den Heizflächen der Wirbelschicht-Verbrennungsanlage 43. Dampfseitig sind sowohl der Abhitzedampferzeuger 80 als auch die Wirbelschicht-Verbrennungsanlage 43 an die Dampfturbine 84 angeschlossen. Hierzu dienen Dampfleitungen 43a und 80a. Eine Speisewasserpumpe 97 versorgt den Abhitzedampferzeuger 44 mit Speisewasser, das vom Abhitzdampferzeuger 80 abgeleitet wird. Eine von einer mittleren Stufe der Dampfturbine 84 ausgehende Dampfanschlußleitung 98 führt zur Mahl-Trocknungs-Anlage 20. Dem Abhitzedampferzeuger 80 ist in bekannter Weise eine Umwälzpumpe 99 zugeordnet.

Beim Betrieb des Kraftwerks 1 gemäß dem Ausführungsbeispiel der Figur 1 werden von der Gasturbine 8 der Generator 10 und der Luftverdichter 12 angetrieben. Letzterer drückt dabei Luft L sowohl in die Brennkammer 14 der Gasturbine 8 als auch in die Luftzerlegungsanlage 26. In der Luftzerlegungsanlage 26 wird z.B. durch Kälteeinwirkung der Stickstoff $N_2$ vom Sauerstoff $O_2$ getrennt. Der Sauerstoff $O_2$ wird von dem Sauerstoffverdichter 30 über die Wärmetauscheranlage 70, die vor der Kohlendioxid-Eisanlage 66 angeordnet ist, in den Wirbelschichtvergaser 18 gedrückt. Gleichzeitig wird ein fossiler Brennstoff FB, hier z.B. Braunkohle, in der Mahl- und Trocknungsanlage 20 gemahlen und getrocknet. Diese Anlage 20 wird mit über die Dampfanschlußleitung 98 zugeführtem Dampf indirekt beheizt. Der gemahlene trockene Brennstoff FB wird in den Brennstoffbunker 22 gefördert. Er wird dort mit dem über die Stickstoffleitung 32 geführten Stickstoff $N_2$ inertisiert. Der Wirbelschichtvergaser 18 wird sodann über die Dosiervorrichtung 24 dosiert mit dem gemahlenen trockenen Brennstoff FB versorgt.

Im Wirbelschichtvergaser 18 wird der zugeführte Brennstoff FB nicht vollständig umgesetzt, d.h. nicht ausreichend vergast. Das hier erzeugte stark staubhaltige Rohgas RG enthält im wesentlichen neben Wasserstoff $H_2$ auch einen Anteil an Kohlenmonoxid CO. Darüber hinaus enthält es Schwefelwasserstoff $H_2S$ und Kohlenoxidsulfid COS. Das Rohgas RG gelangt in den ersten Staubabscheider 36, der die abgeschiedenen Staubpartikel wieder in den Wirbelschichtvergaser 18 zurückführt, d.h. rezirkuliert.

In dem zweiten Staubabscheider 38 wird weiterer Staub abgeschieden. Er wird in die konventionelle Wirbelschicht-Feuerungsanlage 43 befördert. In dieser Anlage 43 wird der Staub zusammen mit weiterem Staub, der im Naßabscheider 48 abgeschieden wird, mit über den Luftverdichter 72 zugeleiteter Luft L verbrannt. Die dabei erzeugte Wärme wird in den Heizflächen der Wirbelschicht-Feuerungsanlage 43 zur Dampferzeugung ausgenutzt. Das Speisewasser hierfür wird vom Speisewasserbehälter 92 geliefert. Wie erwähnt, ist die Wirbelschicht-Feuerungsanlage 43 über den zweiten Strang 95 der Speisewasserleitung an den Speisewasserbehälter 92 des Dampfturbinenkraftwerksteils 4 angeschlossen. Der an den Heizflächen der Wirbelschicht-Feuerungsanlage 43 erzeugte Dampf wird über die Dampfleitung 43a an die Hochdruckstufe der Dampfturbine 84 geliefert.

Das Rohgas RG des Wirbelschichtvergasers 18 durchströmt nach Entstauben in den beiden Staubabscheidern 36, 38 nacheinander den Abhitzedampferzeuger 44 und den Rohgas-Reingas-Wärmetauscher 46. Es gibt dort den größten Teil seiner Wärme ab. Dabei wird im Abhitzedampferzeuger 44 mit dem über die Speisewasserpumpe 97 zugeführten heißen Speisewasser Dampf erzeugt; und im Rohgas-Reingas-Wärmetauscher 46 wird dabei das der Brennkammer 14 der Gasturbine 8 zuströmende Reingas GG aufgeheizt. Hinter dem Rohgas-Reingas-Wärmetauscher 46 findet im Naßabscheider 48 eine Naßabscheidung der restlichen Staubanteile sowie eine Gasreinigung statt, in der alle wasserlöslichen Bestandteile, wie Ammoniak, Chlorwasserstoff, Fluorwasserstoff, ausgewaschen werden und in der das Rohgas RG mit Wasserdampf $H_2O$ angereichert wird. Dieser Wasserdampf $H_2O$ kann in der Anlage 48 selbst aufgrund Aufhitzung von eingepeistem Wasser erzeugt werden. Er kann aber auch bereits in Dampfform von anderen Komponenten des Kraftwerks 1 entnommen werden (beispielsweise aus der Niederdruckschiene der später näher beschriebenen Dampfturbinenanlage 84).

Das gereinigte Rohgas RG wird über die Gas/Gas-Wärmetauscheranlage 62 in die Konvertierungsanlage 52 eingeleitet. Hier wird das Kohlenmonoxid CO zusammen mit dem bereits vorhandenen Wasserdampf, der z.B. an der Mischstelle 50 zugegeben ist, oder mit noch hier zusätzlich eingeleitetem Prozeßwasserdampf $H_2O$ zu Kohlendioxid $CO_2$ aufoxidiert, wobei Wasserstoff $H_2$ erzeugt wird. Es gilt also die Beziehung:

$$CO + H_2O \longrightarrow CO_2 + H_2.$$

Die Beaufschlagung mit Wasser und/oder Wasserdampf $H_2O$ in der Anlage 48, 50 und/oder 52 wird dabei so gewählt, daß eine vollständige Konvertierung des Rohgases RG erreicht wird. Das Rohgas RG enthält nach der Konvertierung also praktisch kein Kohlenmonoxid CO mehr, das nach Verbrennung zu $CO_2$ umgesetzt und bei Freisetzung zum eingangs genannten Treibhauseffekt beitragen würde.

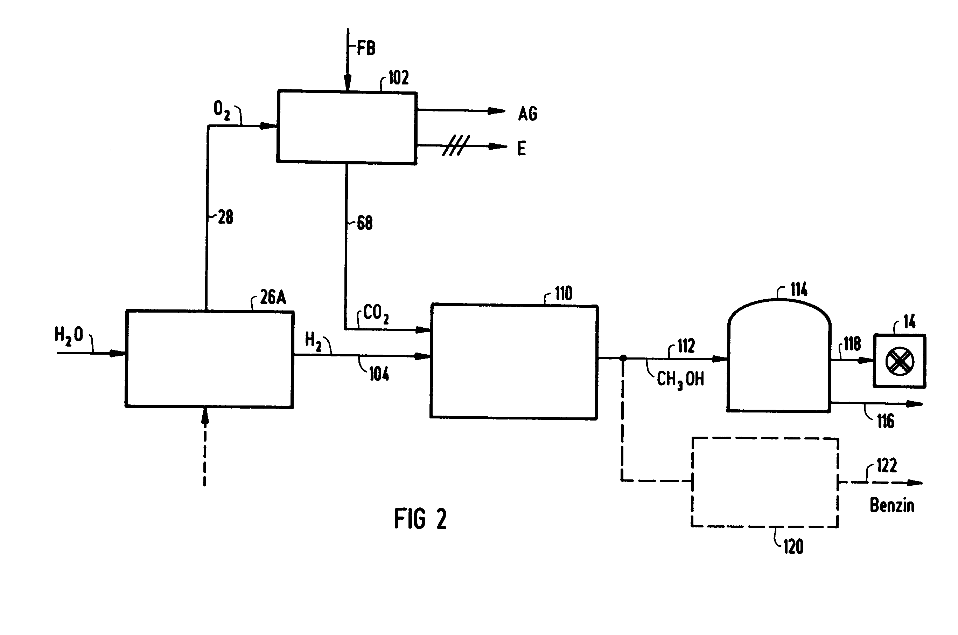

Nach der Konvertierung strömt das Gas RG über die Gas/Gas-Wärmetauscheranlage 62 in die Anlage 54 zur Kohlenoxidsulfidhydrolyse ein. Dort wird das Kohlensulfidoxid COS in bekannter Weise in Schwefelwasserstoff $H_2S$ und Kohlendioxid $CO_2$ umgewandelt. Danach gelangt das Gas RG über die Entschwefelungsanlage 56 in die Kohlendioxid-Waschanlage 58. In der Anlage 56 wird der Schwefelwasserstoff $H_2S$ mit einem Waschmittel ausgewaschen. Und in der Kohlendioxid-Waschanlage 58 wird das Kohlendioxid $CO_2$ mittels eines geeigneten Waschmittels, wie z.B. Methyldiethanolamin, ausgewaschen und unter Druck über eine Leitung 60 abgegeben. Es könnte hier aber auch ein anderes Waschmittel, wie beispielsweise Methanol, eingesetzt werden. Das ausgewaschene Schwefelwasserstoffgas $H_2S$ und das Kohlendioxidgas $CO_2$ werden durch Regenerierung des Waschmittels freigesetzt. Das abgetrennte Schwefelwasserstoffgas $H_2S$ wird in die Clausanlage 64 zur Erzeugung von Schwefel 5 geleitet und somit entsorgt. Damit ist also eine industrielle Nutzung des Schwefels S gegeben. Das abgetrennte Kohlendioxidgas $CO_2$ wird ebenfalls entsorgt. Vorliegend wird es über die Leitung 68 der Wärmetauscheranlage 70 zugeleitet. Es wird dort mit dem kalten Sauerstoff $O_2$ der Luftzerlegungsanlage 26 vorgekühlt und dann in die Kohlendioxid-Eisanlage 66 eingeleitet. Durch die Vorkühlung wird der Energiebedarf der Kohlendioxid-Eisanlage 66 relativ gering gehalten. Das $CO_2$-Eis kann industriell weiter genutzt werden. Stattdessen kann auch eine andere Entsorgung des aus der Trennanlage 58 herrührenden Kohlendioxids vorgesehen sein. Nach der Umwandlung in Kohlendioxid-Eis kann letzteres im Meer - insbesondere in der Tiefsee - versenkt werden. Auch ist es möglich, das $CO_2$-Gas über eine Pipeline in Erdölfelder zu pressen (tertiäre Ölförderung). Dadurch wird der Förderdruck erhöht; das $CO_2$ bleibt weitgehend unter Tage. Eine weitere Alternative, bei der das $CO_2$-Gas zur Methanol-Synthese eingesetzt wird, wird später anhand von Figur 2 beschrieben.

Das die Entschwefelungsanlage 56 und die nachgeschaltete Kohlendioxid-Waschanlage 58 verlassende Reingas GG enthält somit im wesentlichen nur noch Wasserstoff $H_2$. Dieses Reingas GG wird im Rohgas/Reingas-Wärmetauscher 46 aufgeheizt, bevor es über die Reingasleitung 60 als Brenngas in die Brennkammer 14 der Gasturbine 8 geleitet wird.

Außer dem Reingas GG und der Luft L wird auch noch Stickstoff $N_2$ aus der Luftzerlegungsanlage 26 in die Brennkammer 14 eingeleitet. Der Stickstoff $N_2$ dient zu Vermehrung des Gasvolumens und zur Absenkung der $NO_x$-Emission.

Der Wirbelschichtvergaser 18 kann - wie bereits angedeutet außer mit dem Sauerstoff $O_2$ der Luftzerlegungsanlage 26 auch direkt mit Frischluft L über das Ventil 74 gespeist werden. Die Anlage 26 kann dann entfallen.

Durch die getroffenen Maßnahmen ist vor allem sichergestellt, daß das Rauchgas oder Abgas AG der Gasturbine 8, das hinter dem Kondensatvorwärmer 82 in die Atmosphäre entlassen wird, weitgehend frei von Kohlendioxid ist. Es enthält im wesentlichen nur

noch Wasserdampf $H_2O$ und Stickstoff $N_2$, die beide keinen nennenswerten Einfluß auf das Erdklima haben.

Figur 2 zeigt eine Anlage mit einer alternativen Verwendung des erzeugten Kohlendioxids $CO_2$. Kernstück der hier gezeigten Anlage ist wiederum ein GUD-Kraftwerk 102 mit integriertem Kohlevergaser. Es kann sich also dabei um die in Figur 1 dargestellte Anlage handeln, bei der allerdings die Komponenten 26, 66 und 70 fehlen. Dem GUD-Kraftwerk 102 wird wiederum ein fossiler Brennstoff FB zugeführt. Es gibt dafür Elektrizität E, Kohlendioxid $CO_2$ und ein Abgas AG ab. Zur $CO_2$- Erzeugung wird hier über eine Sauerstoffleitung 28 herangeführter Sauerstoff $O_2$ verwendet, der von einer Elektrolyse-Anlage 26A geliefert wird. Diese Elektrolyseanlage 26A wird mit Wasser $H_2O$ und elektrischer Energie gespeist. Sie gibt über eine Leitung 104 auch Wasserstoff $H_2$ ab.

Das über die Leitung 68 gelieferte Kohlendioxid $CO_2$ und der über die Leitung 104 gelieferte Wasserstoff $H_2$ werden einer Methanol-Syntheseanlage 110 zugeführt. Diese Anlage 110 bildet hieraus nach der Beziehung

$$CO_2 + 3\,H_2 \longrightarrow CH_3OH + H_2O$$

Methanol $CH_3OH$ und Wasser $H_2O$. Das Methanol $CH_3OH$ kann industriell weiterverwendet werden. Vorliegend wird es über eine Leitung 112 in einen Tank 114 geleitet. Der Tank 114 dient als Speicher für die im Methanol $CH_3OH$ gespeicherte chemische Energie. Vom Tank 114 kann das Methanol über eine Leitung 116 für industrielle Zwecke abgezapft werden. Alternativ hierzu kann auch vorgesehen sein, das Methanol $CH_3OH$ in die Brennkammer 14 der Gasturbine 8 (vgl. Figur 1) zu leiten. Dies ist durch eine Leitung 118 angedeutet. Die Verbrennung in der Brennkammer 14 dient dann insbesondere zur Deckung des Spitzenbedarfs an Elektrizität E ("Peak Shaving").

Das in der Methanol-Syntheseanlage 110 erzeugte Methanol $CH_3OH$ kann alternativ auch in einer Anlage 120 zu Benzin umgewandelt werden. Diese Alternative ist gestrichelt dargestellt. Anlagen 120, die nach dem sogenannten MTG-Prozeß ("Methanol-to-Gasoline") arbeiten, sind im Stande der Technik bekannt. Das am Ausgang 122 abgegebene Benzin kann dann beispielsweise zum Antrieb von Verbrennungsmotoren eingesetzt werden.

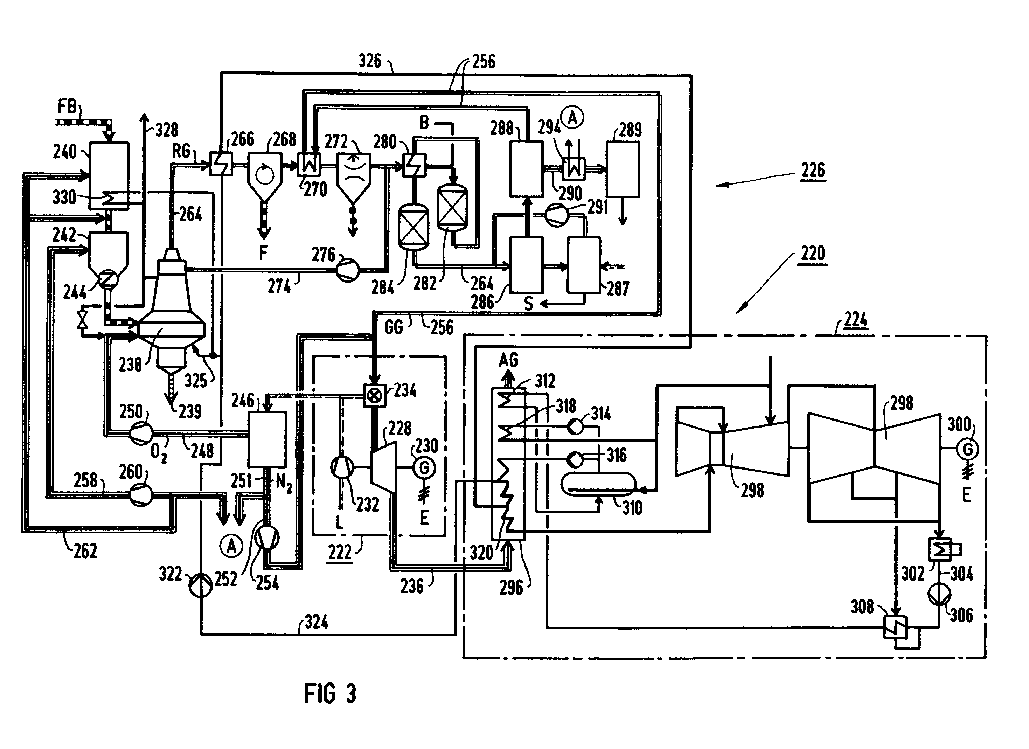

In Figur 3 ist in einer schematischen Darstellung ein Gas- und Dampfturbinenkraftwerk 220 mit einem Gasturbinenkraftwerksteil 222 und einem Dampfturbinenkraftwerksteil 224 sowie mit einer dem Gasturbinenkraftwerksteil 222 brennstoffseitig vorgeschalteten Anlage 226 zur Erzeugung des Brenngases für den Gasturbinenkraftwerkteil 222 gezeigt. Der Gasturbinenkraftwerksteil 222 besteht - wie der Gasturbinenkraftwerksteil der Figur 1 - aus einer Gasturbine 228, aus einem von der Welle der Gasturbine angetriebenen Generator 230 und Luftverdichter 232, aus einer der Gasturbine 228 vorgeschalteten Brennkammer 234 und aus einer die Gasturbine 228 verlassenden Abgasleitung 236.

Die Anlage 226 zur Erzeugung des Brenngases für die Brennkammer 234 der Gasturbine 228 umfaßt im gezeigten Ausführungsbeispiel einen Flugstromvergaser 238, dem brennstoffseitig eine Mahl- und Trocknungs-Anlage 240 und ein Brennstoffbunker 242 mit Dosiervorrichtung 244 für den fossilen Brennstoff FB vorgeschaltet sind. Dem Flugstromvergaser 238 ist gasseitig eine Luftzerlegungsanlage 246 vorgeschaltet, welche vom Luftverdichter 232 des Gasturbinenkraftwerksteils 222 mit Luft L versorgt wird. Die Sauerstoffleitung 248 der Luftzerlegungsanlage 246 ist über einen Sauerstoffverdichter 250 an den Flugstromvergaser 238 angeschlossen. Ein erster Zweig 252 der Stickstoffleitung 251 der Luftzerlegungsanlage 246 ist über einen Stickstoffverdichter 254 an die in die Brennkammer 234 der Gasturbine 228 mündende Reingasleitung 256 angeschlossen. Ein zweiter Zweig 258 der Stickstoffleitung 251 ist über einen zweiten Stickstoffverdichter 260 an den Brennstoffbunker 242 und ein dritter Zweig 262 der Stickstoffleitung 251 ist an die Mahl-Trocknungs-Anlage 240 angeschlossen.

Rohgasseitig ist der Flugstromvergaser 238 über eine Rohgasleitung 264 an einen Abhitzedampferzeuger 266, an einen Staubabscheider 268 und von dort über einen Rohgas/Reingas-Wärmetauscher 270 an einen Venturiwäscher 272 angeschlossen. Hinter dem Venturiwäscher 272 schließt sich an der Rohgasleitung 264 eine Rezirkulationsleitung 274 an, über die ein Teil des Rohgases RG durch einen Rohgasverdichter 276 in den Flugstromvergaser 238 rezirkuliert wird. In der weiterführenden Rohgasleitung 264 ist hinter dem Venturiwäscher 272 ein Gas/Gas-Wärmetauscher 280 angeordnet. An die Rohgasleitung 264 schließen sich nachfolgend, wie beim Ausführungsbeispiel der Figur 1, eine Konvertierungsanlage 282, eine Anlage 284 zur Kohlenoxidsulfidhydrolyse, eine anlage 286 zur Entfernung von Schwefelwasserstoff und eine Anlage 288 zur Entfernung von Kohlendioxid $CO_2$ an. Die Anlagen 286, 288 können auch vereinigt sein. Die Leitung 264 ist dann als Reingasleitung 256 für Reingas GG hinter dem Rohgas/Reingas-Wärmetauscher 270 an die Brennkammer 234 der Gasturbine 228 angeschlossen. Wie erwähnt, ist in der Rohgasleitung 264 vor der Anlage 284 zur Kohlenoxidsulfidhydrolyse der Gas/Gas-Wärmetauscher 280 eingebaut, der von dem der Konvertierungsanlage 282 zuströmenden Rohgas RG durchströmt ist. Die Anlagen 286, 288 zur Entfernung von Schwefelwasserstoff $H_2S$ bzw. Kohlendioxid $CO_2$ sind einerseits an eine Clausanlage 287 mit Gasverdichter 291 und Abgabestutzen für Schwefel S bzw. andererseits an eine Kohlendioxid-Eisanlage 289 angeschlossen. In der zur Kohlendioxid-Eisanlage 289 führenden Kohlendioxidleitung 290 ist eine Wärmetauscheranlage 294 eingebaut, die an die Stickstoffleitung 251 vor dem Stickstoffverdichter 260 bei "A" angeschlossen ist.

Der Dampfturbinenkraftwerksteil 224 umfaßt einen in der Abgasleitung 236 der Gasturbine 228 angeordneten Abhitzedampferzeuger 296. Am Abhitzedampferzeuger 296 ist dampfseitig eine mehrstufige Dampfturbine 298 mit auf der Welle angekuppeltem elektrischen Generator 300 angeschlossen. Abdampfseitig ist die Dampfturbine 298 an einen Kondensator 302 angeschlossen. An den Kondensator 302 schließen sich eine Kondensatleitung 304 mit einer Kondensatpumpe 306, ein vom Niederdruckdampf der Dampfturbine 298 durchströmter Kondensatorvorwärmer 308 und ein Speisewasserbehälter 310 an. Zwischen dem Kondensatorvorwärmer und dem Speisewasserbehälter 310 sind am kalten Ende des Abhitzedampferzeugers 296 angeordnete Speisewasservorwärm-Heizflächen 312 geschaltet. An dem Speisewasserbehälter 310 sind zwei Speisewasserpumpen 314, 316 angeschlossen. Die eine Speisewasserpumpe 314 speist die Niederdruckheizflächen 318 des Abhitzedampferzeugers 296, die ihrerseits wiederum an den Mitteldruckteil der Dampfturbine 298 angeschlossen sind. Und die andere Speisewasserpumpe 316 ist an die Hochdruckheizflächen 320 des Abhitzedampferzeugers 296 angeschlossen, die ihrerseits wiederum an den Hochdruckteil der Dampfturbine 298 angeschlossen sind. Ausgehend von den Hochdruckheizflächen 320 des Abhitzedampferzeugers 296 ist über eine weitere Speisewasserpumpe 322 ein Speisewasserstrang 324 an den Abhitzedampferzeuger 266 hinter dem Flugstromvergaser 238 angeschlossen. Dessen Dampfleitung 326 wiederum ist an die Überhitzerheizflächen des Hochdrucksystems des Abhitzedampferzeugers 296 angeschlossen.

Beim Betrieb des Kraftwerks 220 gemäß dem Ausführungsbeispiel der Figur 3 werden von der Gasturbine 228 der Generator 230 und der Luftverdichter 232 angetrieben. Letzterer drückt Luft L sowohl in die Brennkammer 234 der Gasturbine 228 als auch in die Luftzerlegungsanlage 246. In der Luftzerlegungsanlage 246 wird der Stickstoff $N_2$ vom Sauerstoff $O_2$ getrennt, und der Sauerstoff $O_2$ wird von dem Sauerstoffverdichter 250 in den Flugstromvergaser 238 gedrückt. Gleichzeitig wird kalter Stickstoff $N_2$ aus der Luftzerlegungsanlage 246 von dem Stickstoffverdichter 260 zum einen über den Anschluß "A" durch die Wärmetauscheranlage 294 vor der Kohlendioxid-Eisanlage 289 und zum anderen in den Brennstoffbunker 242 gedrückt. Weiterer Stickstoff $N_2$ wird über den Stickstoffverdichter 254 in die Reingasleitung 256 vor der Brennkammer 234 gedrückt. Schließlich wird über die dritte Stickstoffleitung 262 Stickstoff $N_2$ zu Inertisierungszwecken in die Mahl-Trocknungs-Anlage 240 geleitet, d.h., um ein vorzeitiges Zünden des Brennstoffes FB zu unterbinden. Der gemahlene Brennstoff FB wird von der Dosiervorrichtung 244 dosiert in den Flugstromvergaser 238 eingebracht. Außerdem wird Speisewasser von der Speisewasserpumpe 322 über Leitung 325 in die Heizflächen des Flugstromvergasers 238 gedrückt und dort in Dampf umgewandelt. Dieser Dampf wird über die Dampfleitung 328 teilweise in die an den Flugstromvergaser 238 angeschlossene Sauerstoffleitung 248 eingebracht, insbesondere eingedüst. Ein weiterer Teil dieses Dampfes wird in die in der Mahl-Trocknungs-Anlage 240 eingebauten Heizflächen 330 eingeleitet. Ein gegebenenfalls weiterer Teil dieses Dampfes wird in den Mitteldruckteil der Dampfturbine 298 geleitet.

Im Flugstromvergaser 238 wird der eingesetzte Brennstoff FB nahezu vollständig umgesetzt. Die zurückbleibende Schlacke wird schmelzflüssig über Leitung 239 abgezogen. Das den Flugstromvergaser 238 verlassende Rohgas RG wird zunächst im Abhitzedampferzeuger 266 vorgekühlt und sodann im nachgeschalteten Staubabscheider 268 von mitgerissener Flugasche F befreit. Hinter dem Staubabscheider 268 gibt das Rohgas RG weitere Wärme an den Rohgas/Reingas-Wärmetauscher 270 ab und heizt damit das der Brennkammer 234 zuströmende Reingas GG auf. Im nachgeschalteten Venturiwäscher 272 wird das Rohgas RG von Staub befreit und zugleich mit Wasserdampf gesättigt. Weiterer Wasserdampf wird dem Rohgas RG vor der Konvertierungsanlage 282 bei "B" zugeführt. In der Konvertierungsanlage 282 wird das Kohlenmonoxid CO des Rohgases RG zusammen mit dem zugeführten Wasserdampf $H_2O$ in Kohlendioxid $CO_2$ und Wasserstoff $H_2$ umgesetzt. Dieses Gas ($H_2O$, $CO_2$, $H_2$) wird im Gas/Gas-Wärmetauscher 280 abgekühlt und in die Anlage 284 zur Kohlenoxidsulfidhydrolyse geleitet, wo das Kohlenoxidsulfid katalytisch in Schwefelwasserstoff $H_2S$ und Kohlendioxid $CO_2$ umgesetzt wird. Nachfolgend wird das Gas in die Entschwefelungsanlage 286 und die Kohlendioxidwaschanlage 288 geleitet, in der die der Schwefelwasserstoff $H_2S$ und das Kohlendioxid $CO_2$, z.B. in einem Arbeitsgang, mit einem geeigneten Waschmittel, wie Methyldiethanolamin, ausgewaschen wird. Als weiteres Waschmittel eignet sich hierfür aber auch Methanol. Das dabei ausgewaschene Schwefelwasserstoffgas $H_2S$ und das Kohlendioxidgas $CO_2$ werden durch fraktionierte Regenerierung des Waschmittels getrennt wieder abgegeben. Dabei wird der abgetrennte Schwefelwasserstoff $H_2S$ in der Clausanlage 287 in Schwefel S umgewandelt, und das abgetrennte Kohlendioxid $CO_2$ wird über die Wärmetauscheranlage 294 in die Kohlendioxid-Eisanlage 289 eingeleitet. Die Wärmetauscheranlage 294, die von dem kalten, die Luftzerlegungsanlage 246 verlassenden Stickstoff $N_2$ durchströmt wird, kühlt dabei das Kohlendioxidgas $CO_2$ stark ab, so daß der Energieverbrauch der Kohlendioxid-Eisanlage 289 relativ gering gehalten werden kann. Das die Entschwefelungsanlage 286 und danach die Kohlendioxid-Waschanlage 288 verlassende gereinigte Gas oder Reingas GG enthält somit im wesentlichen nur noch Wasserstoff $H_2$. Dieses Reingas GG wird im Rohgas/Reingas-Wärmetauscher 270 aufgeheizt, bevor es in die Brennkammer 234 der Gasturbine 228 gelangt. Kurz vor dem Einströmen in die Brennkammer 234 der Gasturbine 228 wird diesem Brenngas noch Stickstoff $N_2$ zugemischt, um die $NO_x$-Emission klein zu halten.

In diesem Fall ist das den Abhitzedampferzeuger 296 des Dampfturbinenkraftwerks 224 verlassende Abgas AG der Gasturbine 228 praktisch frei von Kohlendioxid $CO_2$. Es enthält im wesentlichen nur noch Wasserdampf und Stickstoff sowie geringe Mengen von Stickoxiden.

## Patentansprüche

1. Verfahren zur Minderung des Kohlendioxidgehaltes des Abgases (AG) eines Gas- und Dampfturbinenkraftwerks (1, 220) mit einem der Brennkammer (14, 234) der Gasturbine (8, 228) vorgeschalteten Vergaser (18, 238) für einen fossilen Brennstoff (FB), wobei der Vergaser (18, 238) ein Rohgas (RG) abgibt, das neben Wasserstoff ($H_2$) auch Kohlenmonoxid (CO) und gegebenenfalls weitere Gase enthält, wobei das Rohgas (RG) des Vergasers (18, 238) mit Wasser ($H_2O$) angereichert und das im Rohgas (RG) enthaltene Kohlenmonoxid (CO) mit dem zugegebenen Wasser ($H_2O$) nach der Beziehung

$$CO + H_2O \rightarrow CO_2 + H_2$$

zu Kohlendioxid ($CO_2$) und Wasserstoff ($H_2$) katalytisch konvertiert wird, und wobei der durch die Konversion erzeugte Wasserstoff ($H_2$) zusammen mit dem ursprünglich im Rohgas (RG) bereits enthaltenen Wasserstoff ($H_2$) in der Brennkammer (14, 234) verbrannt wird, **dadurch gekennzeichnet,** daß das durch die Konversion erzeugte Kohlendioxid ($CO_2$) - insbesondere mit einem geeigneten Waschmittel - abgetrennt und die Abgabe an die Atmosphäre verhindert, zumindest gering gehalten wird, wobei das abgetrennte Kohlendioxid ($CO_2$) entweder

a) in Kohlendioxid-Eis umgewandelt wird, welches der industriellen Nutzung oder der Versenkung im Meer zugeführt wird, oder

b) zur tertiären Ölförderung herangezogen wird, oder

c) in Methanol ($CH_3OH$) oder

d) in Benzin umgewandelt wird, und daß das kohlendioxidfreie, im wesentlichen Wasserstoff ($H_2$) enthaltende Restgas (GG) der Brennkammer (14, 234) der Gasturbine (8, 228) als Brenngas zugeführt wird.

2. Verfahren nach Anspruch 1, **dadurch gekennzeichnet,** daß das Rohgas (RG) vor der Konversion mit dem Wasser ($H_2O$) entstaubt, abgekühlt und/oder gereinigt wird.

3. Verfahren nach Anspruch 1 oder 2, **dadurch gekennzeichnet,** daß das Rohgas (RG) nach der Konversion mit dem Wasser ($H_2O$) entschwefelt wird.

4. Verfahren nach einem der Ansprüche 1 bis 3, **dadurch gekennzeichnet,** daß aus dem Rohgas (RG) Kohlenoxidsulfid (COS) entfernt wird, bevorzugt durch Hydrolyse.

5. Verfahren nach einem der Ansprüche 1 bis 4, **dadurch gekennzeichnet,** daß vor der Konversion die Anreicherung des Rohgases (RG) mit in Dampfform vorliegendem Wasser ($H_2O$) erfolgt.

6. Verfahren nach einem der Ansprüche 1 bis 5, **dadurch gekennzeichnet,** daß das Methanol zur Deckung des Spitzen-Elektrizitätsbedarfs ("Peak Shaving") dem Brenner (14, 234) der Gasturbine (8, 228) zugeführt wird.

7. Verfahren nach einem der Anspruch 1 bis 6, **dadurch gekennzeichnet,** daß dem Vergaser (18, 238) eine auf Kühlwirkung beruhende Luftzerlegungsanlage (26, 246) zugeordnet ist, und daß ein Produktgas ($O_2$, $N_2$) der Luftzerlegungsanlage (26, 246) zur Vorkühlung des abgetrennten Kohlendioxids ($CO_2$) verwendet wird.

8. Verfahren nach einem der Ansprüche 1 bis 7, **dadurch gekennzeichnet,** daß der Brennkammer (14, 234) der Gasturbine (8, 228) reiner oder abgereicherter Stickstoff ($N_2$) zugeleitet wird.

9. Verfahren nach einem der Ansprüche 1 bis 8, **dadurch gekennzeichnet,** daß dem Vergaser (18, 238) reiner oder abgereicherter Sauerstoff ($O_2$) zugeleitet wird.

10. Verfahren nach Anspruch 9, **dadurch gekennzeichnet,** daß der Sauerstoff ($O_2$) von einer Luftzerlegungsanlage (26, 246) oder einer Elektrolyseanlage (26A) geliefert wird.

11. Verfahren nach Anspruch 3 oder einem der folgenden Ansprüche, **dadurch gekennzeichnet,** daß das im Rohgas (RG) enthaltene Kohlendioxid ($CO_2$) und der im Rohgas (RG) enthaltene Schwefelwasserstoff ($H_2S$) gemeinsam mit einem Waschmittel, wie zum Beispiel Methyldiethanolamin, ausgewaschen und getrennt durch fraktionierte Regenerierung des Waschmittels abgeschieden werden.

12. Verfahren nach einem der Ansprüche 3 bis 11, **dadurch gekennzeichnet** , daß der aus dem Rohgas (RG) abgetrennte Schwefelwasserstoff (H$_2$S) in Schwefel (S) umgewandelt wird.

13. Gas- und Dampfturbinenkraftwerk (1, 220) mit einem der Brennkammer (14, 234) der Gasturbine (8, 228) vorgeschalteten Vergaser (18, 238) für einen fossilen Brennstoff (FB), wobei der Vergaser (18, 238) im Betrieb ein Rohgas (RG) abgibt, das neben Wasserstoff (H$_2$) auch Kohlenmonoxid (CO) und gegebenenfalls weitere Gase enthält, und wobei vorgesehen sind:

   a) eine Einrichtung (48, 50, 52) zur Anreicherung des Rohgases (RG) mit Wasser (H$_2$O),
   b) eine Konvertierungsanlage (54, 284) zur Konversion des im Rohgas (RG) enthaltenen Kohlenmonoxids (CO) mit dem zugegebenen Wasser (H$_2$O) nach der Beziehung
   $$CO + H_2O ---> CO_2 + H_2$$
   zu Kohlendioxid (CO$_2$) und Wasserstoff (H$_2$), **gekennzeichnet durch**
   c) eine Anlage (58, 286) zur Entfernung des Kohlendioxids (CO$_2$) aus dem Rohgas (RG),
   d) eine Reingasleitung (60, 256), mit der das von Kohlendioxid (CO$_2$) befreite Gas (GG) als Brenngas der Brennkammer (14, 234) der Gasturbine (8, 228) zuführbar ist, und
   e) eine Kohlendioxid-Eisanlage (66, 290), eine Methanol-Syntheseanlage (110) oder eine Benzin-Erzeugungsanlage,
   die an die Anlage (58, 286) zur Entfernung des Kohlendioxids (CO$_2$) angeschlossen ist.

14. Kraftwerk nach Anspruch 13, **dadurch gekennzeichnet,** daß zwischen dem Vergaser (18, 238) und der Brennkammer (14, 234) zusätzlich zur Konvertierungsanlage (54, 282) und zur Anlage (58, 286) zur Entfernung des Kohlendioxids (CO$_2$) eine Staubabscheide-Anlage (36, 38, 268), ein Wärmetauscher (46), eine Gasreinigungsanlage (48, 272), eine Entschwefelungsanlage (56, 286) und/oder eine Anlage (54, 284) zur Entfernung von Kohlenoxidsulfid (COS) angeordnet ist.

15. Kraftwerk nach Anspruch 13 oder 14, **dadurch gekennzeichnet,** daß die Einrichtung (48, 50, 52) zur Anreicherung des Rohgases (RG) mit Wasser (H$_2$O) eine Zumischstelle (50) für Wasserdampf (H$_2$O) umfaßt.

16. Kraftwerk nach einem der Ansprüche 13 bis 15, **dadurch gekennzeichnet,** daß die Methanol-Syntheseanlage (110) über eine Leitung (118) mit der Brennkammer (14, 234) der Gasturbine (8, 228) verbunden ist.

17. Kraftwerk nach einem der Ansprüche 13 bis 16, **dadurch gekennzeichnet,** daß dem Vergaser (18, 238) eine auf Kühlwirkung beruhende Luftzerlegungsanlage (26, 246) zugeordnet ist, und daß zumindest ein Produktgas (N$_2$, O$_2$) der Luftzerlegungsanlage (26, 246) einer Wärmetauscheranlage (70) zur Vorkühlung des abgetrennten Kohlendioxids (CO$_2$) zugeleitet ist.

18. Kraftwerk nach einem der Ansprüche 13 bis 17, **dadurch gekennzeichnet,** daß dem Vergaser (18, 238) eine auf Kühlwirkung beruhende Luftzerlegungsanlage (26, 246) oder eine Elektrolyseanlage (26A) zugeordnet ist, und daß der von dieser Anlage (26, 246, 26A) abgegebene Sauerstoff (O$_2$) in reiner oder abgereicherter Form über eine Leitung (28) dem Vergaser (18, 238) zugeführt ist.

19. Kraftwerk nach einem der Ansprüche 13 bis 18, **dadurch gekennzeichnet,** daß eine Stickstoffquelle (26, 246) vorgesehen ist, die über eine Stickstoffleitung (34, 252) mit der Brennkammer (14, 234) der Gasturbine (8, 228) verbunden ist.

20. Kraftwerk nach einem der Ansprüche 13 bis 19, **dadurch gekennzeichnet,** daß die Abgasleitung (16, 252) der Gasturbine (8, 228) an einen Abhitzedampferzeuger (80, 296) des Dampfturbinenkraftwerkteils (4, 224) angeschlossen ist.

21. Kraftwerk nach einem der Ansprüche 13 bis 20, **dadurch gekennzeichnet,** daß dem Vergaser (18) ein Staubabscheider (36) nachgeschaltet ist, der staubabgabeseitig an eine in den Vergaser (18, 238) zurückführende Rezirkulationsleitung (40) angeschlossen ist.

22. Kraftwerk nach einem der Ansprüche 13 bis 21, **dadurch gekennzeichnet,** daß mehrere Staubabscheider (36, 38) vorgesehen sind, und daß der letzte Staubabscheider (38) bei Verwendung eines Wirbelschichtvergasers (18) mit seiner Staubabzugsleitung (39) an eine Wirbelschicht-Feuerungsanlage (43) angeschlossen ist.

23. Kraftwerk nach einem oder mehreren der Ansprüche 17 bis 22, **dadurch gekennzeichnet,** daß die Stickstoffleitung (262) der Luftzerlegungsanlage (246) an einer dem Vergaser (238) brennstoffseitig vorgeschalteten Mahl- und Trocknungsanlage (240) angeschlossen ist.

24. Kraftwerk nach einem der Ansprüche 13 bis 23, **dadurch gekennzeichnet,** daß ein Gas/Gas-Wärmetauscher (62, 280) angeordnet ist derart, daß dieser von dem der Konvertierungsanlage (52, 282) zuströmenden Rohgas (RG) und von dem aus der Konvertierungsanlage (52, 282) abströmenden konvertierten Rohgas (RG) beaufschlagt ist, und daß dem Gas/Gas-Wärmetauscher (62, 280) zur Aufnahme des konvertierten Rohgases (RG) eine Anlage (54, 284) zur Kohlenoxidsulfid-Hydrolyse nachgeschaltet ist.

25. Kraftwerk nach einem der Ansprüche 13 bis 24, **dadurch gekennzeichnet,** daß als Vergaser ein Flugstromvergaser (238), ein Wirbelschichtvergaser (18) oder ein Festbettvergaser vorgesehen ist.

## Claims

1. Process for reducing the carbon dioxide content of the exhaust gas (AG) of a gas and steam turbine power plant (1, 220) having a gasifier (18, 238) for a fossil fuel (FB) connected upstream of the combustion chamber (14, 234) of the gas turbine (8, 228), the gasifier (18, 238) emitting a raw gas (RG) which contains, apart from hydrogen ($H_2$), carbon monoxide (CO) and optionally other gases also, the raw gas (RG) of the gasifier (18, 238) being enriched with water ($H_2O$), and the carbon monoxide (CO) contained in the raw gas (RG) together with the added water ($H_2O$) being catalytically converted into carbon dioxide ($CO_2$) and hydrogen ($H_2$) according to the equation
$$CO + H_2O \rightarrow CO_2 + H_2$$
the hydrogen ($H_2$) produced by the conversion, together with the hydrogen ($H_2$) originally already contained in the raw gas (RG), being combusted in the combustion chamber (14, 234),
**characterised in that**
the carbon dioxide ($CO_2$) produced by the conversion is separated - in particular with a suitable washing agent - and the emission to the atmosphere is prevented, at least kept low, whereby the separated carbon dioxide ($CO_2$) either
   a) is converted into dry ice which is delivered for industrial use or for sinking in the sea, or
   b) is used for tertiary oil transfer, or
   c) is converted into methanol ($CH_3OH$), or
   d) into gasoline;
and in that the remaining carbon dioxide-free gas (GG), essentially containing hydrogen ($H_2$), is delivered to the combustion chamber (14, 234) of the gas turbine (8, 228) as combustion gas.

2. Process according to claim 1, characterised in that the dust is removed from the raw gas (RG), the raw gas is cooled and/or cleaned before the conversion with water ($H_2O$).

3. Process according to claim 1 or 2, characterised in that sulphur is removed from the raw gas (RG) after the conversion with water ($H_2O$).

4. Process according to one of claims 1 to 3, characterised in that carbon oxysulphide (COS) is removed from the raw gas (RG), preferably by hydrolysis.

5. Process according to one of claims 1 to 4, characterised in that before the conversion the raw gas (RG) is enriched with water ($H_2O$) in vapour form.

6. Process according to one of claims 1 to 5, characterised in that the methanol is delivered to the burner (14, 234) of the gas turbine (8, 228) to cover the peak electricity requirement ("Peak Shaving").

7. Process according to one of claims 1 to 6, characterised in that an air decomposition system (26, 246) based on the cooling action is associated with the gasifier (18, 238), and in that a product gas ($O_2$, $N_2$) of the air decomposition system (26, 246) is used to precool the separated carbon dioxide ($CO_2$).

8. Process according to one of claims 1 to 7, characterised in that pure or depleted nitrogen ($N_2$) is supplied to the combustion chamber (14, 234) of the gas turbine (8, 228).

9. Process according to one of claims 1 to 8, characterised in that pure or depleted oxygen ($O_2$) is supplied to the gasifier (18, 238).

10. Process according to claim 9, characterised in that the oxygen ($O_2$) is delivered from an air decomposition system (26, 246) or an electrolysis system (26A).

11. Process according to claim 3 or one of the following claims, characterised in that the carbon dioxide ($CO_2$) contained in the raw gas (RG) and the hydrogen sulphide ($H_2S$) contained in the raw gas (RG) are washed out together, with a washing agent such as for instance methyldiethanolamine, and are separately precipitated out by fractionated regeneration of the washing agent.

12. Process according to one of claims 3 to 11, characterised in that the hydrogen sulphide ($H_2S$) separated from the raw gas (RG) is converted to sulphur (S).

13. Gas and steam turbine power plant (1, 220) having a gasifier (18, 238) for a fossil fuel (FB) connected upstream of the combustion chamber (14, 234) of the gas turbine (8, 228), the gasifier (18, 238) emitting a raw gas (RB) which during operation contains, apart from hydrogen ($H_2$), carbon

monoxide (CO) and optionally other gases also, and there being provided:

a) a device (48, 50, 52) for enriching the raw gas (RG) with water ($H_2O$),

b) a conversion system (54, 284) for converting the carbon monoxide (CO) contained in the raw gas (RG) with the added water ($H_2O$) according to the equation

$$CO + H_2O ---> CO_2 + H_2$$

to form carbon dioxide ($CO_2$) and hydrogen ($H_2$),

characterised by

c) a system (58, 286) for removing the carbon dioxide ($CO_2$) from the raw gas (RG),

d) a clean gas line (60, 256) with which the gas (GG) freed from carbon dioxide ($CO_2$), can be delivered as combustion gas to the combustion chamber (14, 234) of the gas turbine (8, 228), and

e) a dry ice system (66, 290), a methanol synthesis system (110) or a gasoline production system, which is connected to the system (58, 286) for removing the carbon dioxide ($CO_2$).

14. Power plant according to claim 13, characterised in that between the gasifier (18, 238) and the combustion chamber (14, 234), in addition to the conversion system (54, 282) and to the system (58, 286) for removing the carbon dioxide ($CO_2$), there is arranged a dust separation system (36, 38, 268), a heat exchanger (46), a gas purification system (48, 272), a desulphurisation system (56, 286) and/or a system (54, 284) for removing carbon oxysulphide (COS).

15. Power plant according to claim 13 or 14, characterised in that the device (48, 50, 52) for enriching the raw gas (RG) with water ($H_2O$) includes a mixing station (50) for water vapour ($H_2O$).

16. Power plant according to one of claims 13 to 15, characterised in that the methanol synthesis system (110) is connected via a line (118) to the combustion chamber (14, 234) of the gas turbine (8, 228).

17. Power plant according to one of claims 13 to 16, characterised in that an air decomposition system (26, 246) based on the cooling action is associated with the gasifier (18, 238), and in that at least one product gas ($N_2$, $O_2$) of the air decomposition system (26, 246) is supplied to a heat exchanger system (70) to precool the separated carbon dioxide ($CO_2$).

18. Power plant according to one of claims 13 to 17, characterised in that an air decomposition system (26, 246) based on the cooling action, or an electrolysis system, is associated with the gasifier (18, 238), and in that the oxygen ($O_2$) emitted from this system (26, 246, 26A) is supplied in pure or depleted form to the gasifier (18, 238) via a line (28).

19. Power plant according to one of claims 13 to 18, characterised in that a nitrogen source (26, 246) is provided which is connected via a nitrogen line (34, 252) to the combustion chamber (14, 234) of the gas turbine (8, 228).

20. Power plant according to one of claims 13 to 19, characterised in that the exhaust gas line (16, 252) of the gas turbine (8, 228) is connected to a waste heat steam generator (80, 296) of the steam turbine power plant portion (4, 224).

21. Power plant according to one of claims 13 to 20, characterised in that a dust separator (36) is connected downstream of the gasifier (18) and is connected on the dust-discharge side to a recirculation line (40) leading back into the gasifier (18, 238).

22. Power plant according to one of claims 13 to 21, characterised in that several dust separators (36, 38) are provided and in that when using a fluidised bed gasifier (18) the last dust separator (38) with its dust discharge line (39) is connected to a fluidised bed furnace plant (43).

23. Power plant according to one or more than one of claims 17 to 22, characterised in that the nitrogen line (262) of the air decomposition system (246) is connected to a grinding and drying system (240) connected upstream of the gasifier (238) on the fuel side.

24. Power plant according to one of claims 13 to 23, characterised in that a gas/gas heat exchanger (62, 280) is arranged in such a way that it is acted upon by the converted raw gas (RG) flowing to the conversion system (52, 282) and flowing out of the conversion system (52, 282), and in that a system (54, 284) for carbon oxysulphide hydrolysis is connected downstream of the gas/gas-heat exchanger (62, 280) for receiving the converted raw gas (RG).

25. Power plant according to one of claims 13 to 24, characterised in that the gasifier provided is a centrifugal flow gasifier (238), a fluidised bed gasifier (18) or a solid bed gasifier.

## Revendications

1. Procédé pour diminuer la teneur en dioxyde de carbone du gaz d'échappement (AG) d'une centrale électrique à turbine à gaz et à turbine à vapeur (1, 220) comprenant un gazogène (18, 238) pour un combustible (FB) fossile, monté en amont de la chambre de combustion (14, 234) de la turbine à gaz (8, 228), le gazogène (18, 238) emettant un gaz brut (RG) qui contient, outre de l'hydrogène ($H_2$), du monoxyde de carbone (CO) et, le cas échéant, d'autres gaz, le gaz brut (RG) du gazogène (18, 238) étant enrichi en eau ($H_2O$) et le monoxyde de carbone (CO) contenu dans le gaz brut (RG) étant transformé catalytiquement, par l'eau ($H_2O$) ajoutée, en dioxyde de carbone ($CO_2$) et en hydrogène ($H_2$) suivant la relation

$$CO + H_2O \rightarrow CO_2 + H_2$$

l'hydrogène ($H_2$) produit par la transformation étant brûlé dans la chambre de combustion (14, 234) avec l'hydrogène ($H_2$), déjà contenu à l'origine dans le gaz brut (RG), caractérisé en ce qu'il consiste

à séparer le dioxyde de carbone ($CO_2$) produit par la transformation, notamment par un agent de lavage convenable, et à empêcher de l'envoyer à l'atmosphère ou, du moins, à maintenir cet envoi à un faible niveau, le dioxyde de carbone ($CO_2$) séparé étant

a) transformé en neige carbonique qui est envoyée à une utilisation industrielle ou qui est déversée dans la mer, ou

b) utilisé pour la production tertiaire de pétrole, ou

c) transformé en méthanol ($CH_3OH$), ou

d) en essence,

et à envoyer le gaz résiduel (GG) exempt de dioxyde de carbone et contenant sensiblement de l'hydrogène ($H_2$) à la chambre de combustion (14, 234) de la turbine à gaz (8, 228) comme gaz de combustion.

2. Procédé suivant la revendication 1, caractérisé en ce qu'il consiste à dépoussiérer, à refroidir et/ou à épurer le gaz brut (RG), avant la transformation par l'eau ($H_2O$).

3. Procédé suivant la revendication 1 ou 2, caractérisé en ce qu'il consiste à désulfurer le gaz brut (RG) après la transformation par l'eau ($H_2O$).

4. Procédé suivant l'une des revendications 1 à 3, caractérisé en ce qu'il consiste à éliminer, de préférence par hydrolyse, l'oxysulfure de carbone (COS) du gaz brut (RG).

5. Procédé suivant l'une des revendications 1 à 4, caractérisé en ce qu'il consiste à effectuer, avant la transformation, l'enrichissement du gaz brut (RG) par de l'eau ($H_2O$) se présentant sous forme de vapeur.

6. Procédé suivant l'une des revendications 1 à 5, caractérisé en ce qu'il consiste à envoyer le méthanol au brûleur (14, 234) de la turbine à gaz (8, 228) pour couvrir les besoins de pointe en électricité ("Peak Shaving").

7. Procédé suivant l'une des revendications 1 à 6, caractérisé en ce qu'il consiste à associer au gazogène (18, 238) une installation de fractionnement de l'air (26, 246) fonctionnant sur le principe du refroidissement, et à utiliser un produit gazeux ($O_2$, $N_2$) de l'installation de fractionnement de l'air (26, 246) pour prérefroidir le dioxyde de carbone ($CO_2$) séparer.

8. Procédé suivant l'une des revendications 1 à 7, caractérisé en ce qu'il consiste à envoyer de l'azote ($N_2$) pur ou appauvri à la chambre de combustion (14, 234) de la turbine à gaz (8, 228).

9. Procédé suivant l'une des revendications 1 à 8, caractérisé en ce qu'il consiste à envoyer au gazogène (18, 238) de l'oxygène ($0_2$) pur ou appauvri.

10. Procédé suivant la revendication 9, caractérisé en ce qu'il consiste à fournir l'oxygène ($O_2$) à partir d'une installation de fractionnement de l'air (26, 246) ou d'une installation d'électrolyse (26a).

11. Procédé suivant la revendication 3 ou l'une des revendications suivantes, caractérisé en ce qu'il consiste à éliminer ensemble par lavage, par un agent de lavage comme par exemple la méthyldiéthanolamine, le dioxyde de carbone ($CO_2$) contenu dans le gaz brut (RG) et l'hydrogène sulfuré (($H_2S$) contenu dans le gaz brut (RG), et à les séparer indépendamment par régénération fractionnée de l'agent de lavage.

12. Procédé suivant l'une des revendications 3 à 11, caractérisé en ce qu'il consiste à transformer l'hydrogène sulfuré (($H_2S$) séparé du gaz brut (RG) en soufre (S).

13. Centrale électrique à turbine à gaz et à turbine à vapeur (1, 220), comprenant un gazogène (18, 238) pour un combustible (FB) fossile en amont de la chambre de combustion (14, 234) de la turbine à gaz (8, 228), le gazogène (18, 238) émettant en fonctionnement un gaz brut (RG) qui contient, outre de l'hydrogène ($H_2$), du monoxyde de carbone (CO) et, le cas échéant, d'autres gaz, et il est prévu:

a) un dispositif (48, 50, 52) d'enrichissement du gaz brut (RG) en eau ($H_2O$),

b) une installation de conversion (54, 284) pour transformer le monoxyde de carbone (CO) contenu dans le gaz brut (RG), en dioxyde de carbone ($CO_2$) et en hydrogène ($H_2$) par l'eau ($H_2O$) ajoutée suivant la relation

$$CO + H_2O \longrightarrow CO_2 + H_2$$

caractérisée par

c) une installation (58, 286) d'élimination du dioxyde de carbone ($CO_2$) du gaz brut (RG),

d) un conduit pour le gaz épuré (60, 256), par lequel le gaz (GG) débarrassé du dioxyde de carbone ($CO_2$) peut être envoyé comme gaz combustible à la chambre de combustion (14, 234) de la turbine à gaz (8, 228), et

e) une installation à neige carbonique (66, 290), une installation de synthèse du méthanol (110) ou une installation de production d'essence,

qui est raccordée à l'installation (58, 286) d'élimination du dioxyde de carbone ($CO_2$).

14. Centrale électrique suivant la revendication 13, caractérisée en ce qu'il est prévu, entre le gazogène (18, 238) et la chambre de combustion (14, 234), en plus de l'installation de conversion (54, 282) et de l'installation (58, 286) d'élimination du dioxyde de carbone ($CO_2$), une installation de sé-paration des poussières (36, 38, 268), un échangeur de chaleur (46), une installation d'épuration des gaz (48, 272), une installation de désulfuration (56, 286) et/ou une installation (54, 284) d'élimination de l'oxysulfure de carbone (COS).

15. Centrale électrique suivant la revendication 13 ou 14, caractérisée en ce que le dispositif (48, 50, 52) d'enrichissement du gaz brut (RG) en eau ($H_2O$) comporte un point d'addition (50) de va-peur d'eau ($H_2O$).

16. Centrale électrique suivant l'une des revendications 13 à 15, caractérisée en ce que l'installation de synthèse du méthanol (110) communique par un conduit (118) avec la chambre de combustion (14, 234) de la turbine à gaz (8, 228).

17. Centrale électrique suivant l'une des revendications 13 à 16, caractérisée en ce qu'au gazogène (18, 238) est associée une installation de fractionnement de l'air (26, 246) fonctionnant sur le principe du refroidissement, et en ce qu'au moins un produit gazeux ($N_2$, $O_2$) de l'installation de fractionnement de l'air (26, 246) est envoyé à une installation à échangeur de chaleur (70) pour refroidir le dioxyde de carbone ($CO_2$) séparé.

18. Centrale électrique suivant l'une des revendications 13 à 17, caractérisée en ce qu'au gazogène (18, 238) est associée une installation de fractionnement de l'air (26, 246) fonctionnant sur le principe du refroidissement ou une installation d'électrolyse (26A), et en ce que l'oxygène ($O_2$) sortant de cette installation (26, 246, 26A) est envoyé sous forme pure ou sous forme appauvrie au gazogène (18, 238) par un conduit (28).

19. Centrale électrique suivant l'une des revendications 13 à 18, caractérisée en ce qu'il est prévu une source d'azote (26, 246) qui communique par un conduit pour de l'azote (34, 252) avec la chambre de combustion (14, 234) de la turbine à gaz (8, 228).

20. Centrale électrique suivant l'une des revendications 13 à 19, caractérisée en ce que le conduit pour le gaz d'échappement (16, 252) de la turbine à gaz (8, 228) est raccordé à un générateur de vapeur de récupération de la chaleur (80, 296) de la partie de la centrale électrique à turbine à vapeur (4, 224).

21. Centrale électrique suivant l'une des revendications 13 à 20, caractérisée en ce qu'en amont du gazogène (18) est monté un séparateur de poussière (36) qui est raccordé du côté de la sortie de la poussière à un conduit de recirculation (40) retournant au gazogène (18, 238).

22. Centrale électrique suivant l'une des revendications 13 à 21, caractérisée en ce qu'il est prévu plusieurs séparateurs de poussière (36, 38) et en ce que le dernier séparateur de poussière (38) est raccordé, quand on utilise un gazogène à lit fluidisé (18), par son conduit d'évacuation de la poussière (39), à une installation de chauffe à lit fluidisé (43).

23. Centrale électrique suivant ou plusieurs des revendications 17 à 22, caractérisée en ce que le conduit pour l'azote (262) de l'installation de fractionnement d'air (246) est raccordé à une installation de broyage et de séchage (240) montée en amont du côté du combustible du gazogène (238).

24. Centrale électrique suivant l'une des revendications 13 à 23, caractérisée en ce qu'un échangeur de chaleur gaz/gaz (62, 280) est monté de façon à être alimenté par le gaz brut (RG) affluent à l'installation de conversion (52, 282) et par le gaz brut (RG) transformé et sortant de l'installation de conversion (52, 82), et en ce qu'en aval de l'échangeur de chaleur gaz/gaz (62, 280), et pour la réception du gaz brut (RG) transformé est montée une installation (54, 284) d'hydrolyse de l'oxysulfure de carbone.

25. Centrale électrique suivant l'une des revendications 13 à 24, caractérisée en ce qu'il est prévu, comme gazogène, un gazogène à rideau (238), un gazogène à lit fluidisé (18) ou un gazogène à lit fixe.

FIG 1

FIG 2

FIG 3